# EUROPEAN PATENT SPECIFICATION

(11) **EP 4 557 707 B1**
(45) Date of publication and mention of the grant of the patent: **20.05.2026**
(21) Application number: 24194507.0
(22) Date of filing: 14.08.2024
(51) Int. Cl.: H04L 67/12, H04L 9/40, H04W 4/70

(54) **DEVICE MANAGEMENT SYSTEM AND METHOD**
VORRICHTUNGSVERWALTUNGSSYSTEM UND -VERFAHREN
SYSTÈME ET PROCÉDÉ DE GESTION DE DISPOSITIF

(30) Priority: 15.11.2023 TW 112144087
(43) Date of publication of application: 21.05.2025
(73) Proprietor: Getac Technology Corporation, New Taipei City 221009 (TW)
(72) Inventor: Lin, Chi-Tsan, 115 Taipei City (TW)
(74) Representative: Lucke, Andreas

(56) References cited:
- CN-A- 112 073 265

## Description

### FIELD OF THE INVENTION

The present invention relates to a device management system and method, and in particular to a device management system and method concerning the switching of binding.

### DESCRIPTION OF THE PRIOR ART

Internet of Things is a widely used technology for interconnection and information exchange. In a field of Internet of Things with specific binding relationships, both termination and switching of binding have to be done manually by operating personnel. Therefore, discovering a way to simplify the manual operating steps and to achieve automation has become an imperative for the technical field. CN 112 073 265 A describes an Internet of Things monitoring method and system based on distributed edge computing. The method comprises the following steps: building a distributed monitoring servicecluster, enabling the distributed monitoring service cluster to be provided with a plurality of monitoring groups, and enabling each monitoring group to be provided with a plurality of monitoring nodes. The method further comprises acquiring a unique identifier, and distributing the unique identifier to the monitoring nodes; allocating the Internet of Things equipment to the corresponding monitoring nodes in the distributed monitoring service cluster according to the unique identifier of the Internet of Things equipment; acquiring Internet of Things equipment data, and uploading the data to a main monitoring server; and polling the distributed monitoring service cluster, collecting unmatched monitoring nodes, and reconfiguring the unmatched monitoring nodes. With the distributed architecture, the edge computing equipment is arranged in the monitoring service cluster, and the effectiveness, the consistency and the reliability of data transmission of the distributed monitoring service cluster can be ensured by adopting stateful service.

### SUMMARY OF THE INVENTION

The present invention provides a device management system and method that can simplify operation steps of terminating and switching binding and achieve automation.

The device management system provided by the present invention comprises: an entry server, a first server coupled to the entry server, a second server coupled to the entry server, and an electronic device bound with the first server. The device management method executed by the device management system comprises: sending, by the entry server, a server-switching instruction corresponding to the electronic device to the first server, such that the first server sends a binding termination instruction to the electronic device; sending, by the electronic device, an address-requesting instruction corresponding to the second server to the entry server, such that the entry server sends an address of the second server to the electronic device; and sending, by the electronic device, a registration information instruction to the second server to execute binding, and exchanging data information with the second server.

The device management method provided by the present invention is suitable for the device management system, wherein the device management system comprises an entry server, a first server, a second server, and an electronic device, and the electronic device and the first server are bound together. The device management method comprises: sending, by the entry server, a server-switching instruction corresponding to the electronic device to the first server, such that the first server sends a binding termination instruction to the electronic device; sending, by the electronic device, an address-requesting instruction corresponding to the second server to the entry server, such that the entry server sends an address of the second server to the electronic device; and sending, by the electronic device, a registration information instruction to the second server to execute binding, and exchanging data information with the second server.

In an embodiment of the present invention, the above first server and second server are Internet of Things servers, and the electronic device is an Internet of Things device.

In an embodiment of the present invention, the above device management method further comprises: verifying the binding termination instruction, by the electronic device using a public key of the first server, to determine whether to terminate binding.

In an embodiment of the present invention, the above-mentioned sub-step of sending, by an electronic device, a registration information instruction to a second server to execute binding comprises: receiving, by the electronic device, a registration-permitting instruction and a public key from the second server.

In an embodiment of the present invention, the above-mentioned sub-step of exchanging data information between the electronic device and the second server comprises: verifying the data information by the second server using the public key of the electronic device in the registration information instruction to determine whether to receive the data information.

With the adoption of the device management method provided by the present invention, the effects of simplifying steps of terminating and switching binding and realizing automation can be achieved.

Other objectives, features and advantages of the invention will be further understood from the further technological features disclosed by the embodiments of the invention wherein there are shown and described preferred embodiments of this invention, simply by way of illustration of modes best suited to carry out the invention.

### BRIEF DESCRIPTION OF THE DRAWINGS

FIG. 1 is a schematic diagram of a device management system provided by embodiments of the present invention.
FIG. 2 is a flow chart of steps of a device management method provided by embodiments of the present invention.
FIG. 3 is a flow chart of a sub-step of sending, by an electronic device, a registration information instruction to a second server to execute binding, provided by embodiments of the present invention.
FIG. 4 is a flow chart of a sub-step of exchanging data information between the electronic device and the second server, provided by embodiments of the present invention.

### DETAILED DESCRIPTION OF THE EMBODIMENTS

In order to make the purposes, technical solutions and advantages of the present invention more clear, the present invention is further described in detail in conjunction with accompanying drawings and embodiments below.

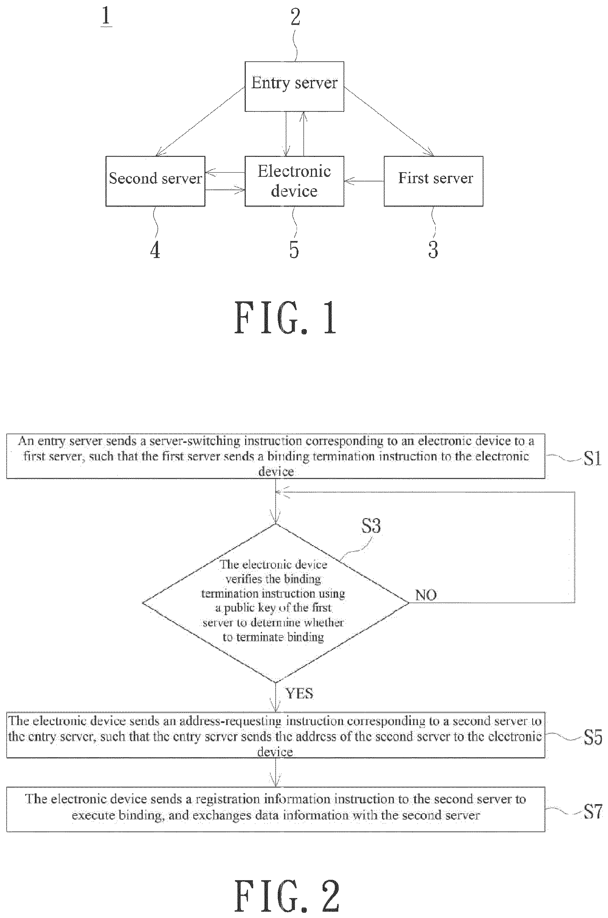

With reference to FIG. 1, it is a schematic diagram of a device management system provided by embodiments of the present invention. The device management system 1 provided by the embodiment comprises an entry server 2, at least one server, and an electronic device 5, wherein the at least one server comprises a first server 3 and a second server 4, and the at least one server is coupled to the entry server 2. Additionally, the first server 3 and the second server 4 are Internet of Things servers, and the electronic device is an Internet of Things device 5.It is to be understood that, in this embodiment, the electronic device 5 and the first server 3 are bound together to perform data information exchange, and then, through the device management method provided by the present invention, the binding between the electronic device 5 and the first server 3 is terminated, and the binding between the electronic device 5 and the second server 4 is registered, so as to allow data information exchange between the electronic device 5 and the second server 4.

With reference to FIG. 2, it is a flow chart of a device management method provided by embodiments of the present invention. The device management method provided by the embodiment, when executed by the device management system 1, comprises the following steps. Step S1: the entry server 2 sends a server-switching instruction corresponding to the electronic device 5 to the first server 3, such that the first server 3 sends a binding termination instruction to the electronic device 5. Specifically, each server has a plurality of bound electronic devices 5 with which each server performs data information exchange. However, in case of an incident, e.g. when the electronic device 5 no longer performs data information exchange with the original server after repair, but performs data information exchange with other servers, the binding between the electronic device 5 and the original server must be terminated before the electronic device can perform registration, binding, and data information exchange with a new server. Therefore, the server-switching instruction corresponding to the electronic device 5 is sent by the entry server 2 to make the original server terminate its binding with the electronic device 5, and make the original server send the binding termination instruction to the electronic device 5 to terminate its binding with the original server, which prevents the electronic device 5, when connected to the internet, from reconnecting to the original server and not being able to perform registration, binding, and data information exchange with the new server.

Step S3: the electronic device 5 verifies the binding termination instruction using a public key of the first server 3 to determine whether to terminate binding. Specifically, the electronic device 5 holds a public key of the original server, which is used for verification when the electronic device performs data information exchange with the original server. Similarly, when its binding with the original server is terminated, the electronic device 5 verifies the binding termination instruction using the public key of the original server. Therefore, when the verification using the public key is successful, the binding will be terminated.

Step S5: when the result is a YES, the electronic device 5 sends an address-requesting instruction corresponding to the second server 4 to the entry server 2, such that the entry server 2 sends an address of the second server 4 to the electronic device 5.Specifically, when its binding with the original server is terminated, the electronic device 5 will request an address of a new server from the entry server 2 before the electronic device and the new server are connected to the internet, so as to perform registration, binding, and data information exchange.

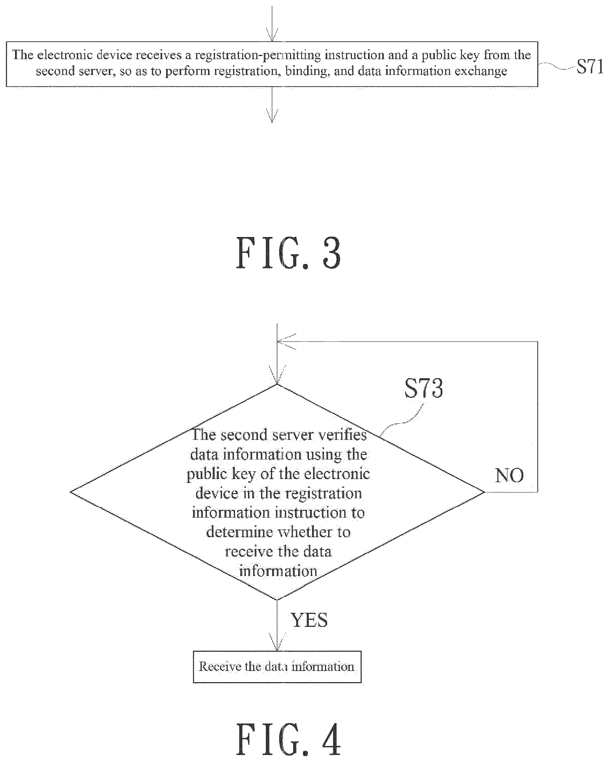

Step S7: the electronic device 5 sends a registration information instruction to the second server 4 to execute binding, and exchanges data information with the second server 4. With reference to FIG. 3, it is a flow chart of a sub-step of sending, by an electronic device, a registration information instruction to a second server to execute binding, provided by embodiments of the present invention. Specifically, when the new server receives the registration information instruction from the electronic device 5 and allows registration of the electronic device 5, Step S71 is executed: the electronic device 5 receives a registration-permitting instruction and a public key from the second server 4, so as to perform registration, binding, and data information exchange.

Then, with reference to FIG. 4, it is a flow chart of a sub-step of exchanging data information between the electronic device and the second server, provided by embodiments of the present invention. When the electronic device 5 performs data information exchange with the new server, Step S73 is executed: the second server 4 verifies the data information using the public key of the electronic device 5 in the registration information instruction to determine whether to receive the data information. Specifically, when the new server exchanges data information with the electronic device 5 after the electronic device 5 is successfully registered and bound with the new server, the data information from the electronic device 5 is verified by the public key of the electronic device 5.

As described above, with the adoption of the device management method provided herein, the effects of simplifying steps of terminating and switching binding and realizing automation can be achieved.

## Claims

1. A device management system (1), comprising:
an entry server (2);
a first server (3), coupled to the entry server (2);
a second server (4), coupled to the entry server (2); and
an electronic device (5), bound with the first server (3);
wherein the device management system (1) executes a device management method, and the device management method comprises:
sending, by the entry server (2), a server-switching instruction corresponding to the electronic device (5) to the first server (3), so that the first server (3) sends a binding termination instruction to the electronic device (5) (S1);
sending, by the electronic device (5), an address-requesting instruction corresponding to the second server (4) to the entry server (2), so that the entry server (2) sends an address of the second server (4) to the electronic device (5) (S5); and
sending, by the electronic device (5), a registration information instruction to the second server (4) to execute binding, and exchanging data information with the second server (4) (S7).

2. The device management system (1) according to claim 1, wherein the first server (3) and the second server (4) are Internet of Things servers, and the electronic device (5) is an Internet of Things device.

3. The device management system (1) according to claim 1 or 2, wherein the device management method further comprises:
verifying the binding termination instruction by the electronic device (5) using a public key of the first server (3) to determine whether to terminate binding (S3).

4. The device management system (1) according to any of the preceding claims, wherein the sending, by the electronic device (5), the registration information instruction to the second server (4) to execute binding comprises:
receiving, by the electronic device (5), a registration-permitting instruction and a public key from the second server (4) (S71).

5. The device management system (1) according to any of the preceding claims, wherein the exchanging of the data information between the electronic device (5) and the second server (4) comprises:
verifying the data information by the second server (4) using a public key of the electronic device (5) in the registration information instruction to determine whether to receive the data information (S73).

6. A device management method suitable for a device management system (1), wherein the device management system (1) comprises an entry server (2), a first server (3), a second server (4), and an electronic device (5), the electronic device (5) and the first server (3) are bound together, and the device management method comprises:
sending, by the entry server (2), a server-switching instruction corresponding to the electronic device (5) to the first server (3), so that the first server (3) sends a binding termination instruction to the electronic device (5) (S1);
sending, by the electronic device (5), an address-requesting instruction corresponding to the second server (4) to the entry server (2), so that the entry server (2) sends an address of the second server (4) to the electronic device (5) (S5); and
sending, by the electronic device (5), a registration information instruction to the second server (4) to execute binding, and exchanging data information with the second server (4) (S7).

7. The device management method according to claim 6, wherein the first server (3) and the second server (4) are Internet of Things servers, and the electronic device (5) is an Internet of Things device.

8. The device management method according to claim 6 or 7, wherein the device management method further comprises:
verifying the binding termination instruction by the electronic device (5) using a public key of the first server (3) to determine whether to terminate binding (S3).

9. The device management method according to any of claims 6 to 8, wherein the sending, by the electronic device (5), the registration information instruction to the second server (4) to execute binding comprises:
receiving, by the electronic device (5), a registration-permitting instruction and a public key from the second server (4) (S71).

10. The device management method according to any of claims 6 to 9, wherein the exchanging of the data information between the electronic device (5) and the second server (4) comprises:
verifying the data information by the second server (4) using a public key of the electronic device (5) in the registration information instruction to determine whether to receive the data information (S73).

## Patentansprüche

1. Vorrichtungsverwaltungssystem (1), umfassend:
einen Eintrittsserver (2);
einen ersten Server (3), der mit dem Eintrittsserver (2) gekoppelt ist;
einen zweiten Server (4), der mit dem Eintrittsserver (2) gekoppelt ist; und
eine elektronische Vorrichtung (5), die mit dem ersten Server (3) verbunden ist;
wobei das Vorrichtungsverwaltungssystem (1) ein Vorrichtungsverwaltungsverfahren ausführt und das Vorrichtungsverwaltungsverfahren Folgendes umfasst:
Senden, durch den Eintrittsserver (2), einer Serverumschaltanweisung, die der elektronischen Vorrichtung (5) entspricht, an den ersten Server (3), so dass der erste Server (3) eine Bindungsbeendigungsanweisung an die elektronische Vorrichtung (5) sendet (S1);
Senden, durch die elektronische Vorrichtung (5), einer Adressenanforderungsanweisung, die dem zweiten Server (4) entspricht, an den Eintrittsserver (2), so dass der Eintrittsserver (2) eine Adresse des zweiten Servers (4) an die elektronische Vorrichtung (5) sendet (S5); und
Senden, durch die elektronische Vorrichtung (5), einer Registrierungsinformationsanweisung an den zweiten Server (4), um eine Bindung auszuführen, und Austauschen von Dateninformationen mit dem zweiten Server (4) (S7).

2. Vorrichtungsverwaltungssystem (1) nach Anspruch 1, wobei der erste Server (3) und der zweite Server (4) Internet-der-Dinge-Server sind und die elektronische Vorrichtung (5) eine Internet-der-Dinge-Vorrichtung ist.

3. Vorrichtungsverwaltungssystem (1) nach Anspruch 1 oder 2, wobei das Vorrichtungsverwaltungsverfahren ferner Folgendes umfasst:
Verifizieren der Bindungsbeendigungsanweisung durch die elektronische Vorrichtung (5) unter Verwendung eines öffentlichen Schlüssels des ersten Servers (3), um zu bestimmen, ob die Bindung beendet werden soll (S3).

4. Vorrichtungsverwaltungssystem (1) nach einem der vorhergehenden Ansprüche, wobei das Senden, durch die elektronische Vorrichtung (5), der Registrierungsinformationsanweisung an den zweiten Server (4), um eine Bindung auszuführen, Folgendes umfasst:
Empfangen, durch die elektronische Vorrichtung (5), einer Registrierungszulassungsanweisung und eines öffentlichen Schlüssels von dem zweiten Server (4) (S71).

5. Vorrichtungsverwaltungssystem (1) nach einem der vorhergehenden Ansprüche, wobei das Austauschen der Dateninformationen zwischen der elektronischen Vorrichtung (5) und dem zweiten Server (4) Folgendes umfasst:
Verifizieren der Dateninformationen durch den zweiten Server (4) unter Verwendung eines öffentlichen Schlüssels der elektronischen Vorrichtung (5) in der Registrierungsinformationsanweisung, um zu bestimmen, ob die Dateninformationen empfangen werden sollen (S73).

6. Vorrichtungsverwaltungsverfahren, das für ein Vorrichtungsverwaltungssystem (1) geeignet ist, wobei das Vorrichtungsverwaltungssystem (1) einen Eintrittsserver (2), einen ersten Server (3), einen zweiten Server (4) und eine elektronische Vorrichtung (5) umfasst, wobei die elektronische Vorrichtung (5) und der erste Server (3) miteinander verbunden sind und das Vorrichtungsverwaltungsverfahren Folgendes umfasst:
Senden, durch den Eintrittsserver (2), einer Serverumschaltanweisung, die der elektronischen Vorrichtung (5) entspricht, an den ersten Server (3), so dass der erste Server (3) eine Bindungsbeendigungsanweisung an die elektronische Vorrichtung (5) sendet (S1);
Senden, durch die elektronische Vorrichtung (5), einer Adressenanforderungsanweisung, die dem zweiten Server (4) entspricht, an den Eintrittsserver (2), so dass der Eintrittsserver (2) eine Adresse des zweiten Servers (4) an die elektronische Vorrichtung (5) sendet (S5); und
Senden, durch die elektronische Vorrichtung (5), einer Registrierungsinformationsanweisung an den zweiten Server (4), um eine Bindung auszuführen, und Austauschen von Dateninformationen mit dem zweiten Server (4) (S7).

7. Vorrichtungsverwaltungsverfahren nach Anspruch 6, wobei der erste Server (3) und der zweite Server (4) Internet-der-Dinge-Server sind und die elektronische Vorrichtung (5) eine Internet-der-Dinge-Vorrichtung ist.

8. Vorrichtungsverwaltungsverfahren nach Anspruch 6 oder 7, wobei das Vorrichtungsverwaltungsverfahren ferner Folgendes umfasst:
Verifizieren der Bindungsbeendigungsanweisung durch die elektronische Vorrichtung (5) unter Verwendung eines öffentlichen Schlüssels des ersten Servers (3), um zu bestimmen, ob die Bindung beendet werden soll (S3).

9. Vorrichtungsverwaltungsverfahren nach einem der Ansprüche 6 bis 8, wobei das Senden, durch die elektronische Vorrichtung (5), der Registrierungsinformationsanweisung an den zweiten Server (4), um eine Bindung auszuführen, Folgendes umfasst:
Empfangen, durch die elektronische Vorrichtung (5), einer Registrierungszulassungsanweisung und eines öffentlichen Schlüssels von dem zweiten Server (4) (S71).

10. Vorrichtungsverwaltungsverfahren nach einem der Ansprüche 6 bis 9, wobei das Austauschen der Dateninformationen zwischen der elektronischen Vorrichtung (5) und dem zweiten Server (4) Folgendes umfasst:
Verifizieren der Dateninformationen durch den zweiten Server (4) unter Verwendung eines öffentlichen Schlüssels der elektronischen Vorrichtung (5) in der Registrierungsinformationsanweisung, um zu bestimmen, ob die Dateninformationen empfangen werden sollen (S73).

## Revendications

1. Système de gestion de dispositifs (1), comprenant :
un serveur d'entrée (2) ; un premier serveur (3), couplé au serveur d'entrée (2) ;
un second serveur (4), couplé au serveur d'entrée (2) ; et
un dispositif électronique (5), lié avec le premier serveur (3) ;
lequel système de gestion de dispositifs (1) exécute un procédé de gestion de dispositifs, et le procédé de gestion de dispositifs comprend :
envoi, par le serveur d'entrée (2), d'une instruction de commutation de serveur correspondant au dispositif électronique (5) au premier serveur (3), de sorte que le premier serveur (3) envoie une instruction de terminaison de liaison au dispositif électronique (5) (S1) ;
envoi, par le dispositif électronique (5), d'une instruction de demande d'adresse correspondant au second serveur (4) au serveur d'entrée (2), de sorte que le serveur d'entrée (2) envoie une adresse du second serveur (4) au dispositif électronique (5) (S5) ; et
envoi, par le dispositif électronique (5), d'une instruction d'information d'enregistrement au second serveur (4) pour exécuter la liaison, et échange d'information de données avec le second serveur (4) (S7).

2. Système de gestion de dispositifs (1) selon la revendication 1, dans lequel le premier serveur (3) et le second serveur (4) sont des serveurs d'Internet des objets, et le dispositif électronique (5) est un dispositif d'Internet des objets.

3. Système de gestion de dispositifs (1) selon la revendication 1 ou 2, dans lequel le procédé de gestion de dispositifs comprend en outre :
vérification de l'instruction de terminaison de liaison par le dispositif électronique (5) à l'aide d'une clé publique du premier serveur (3) pour déterminer s'il faut terminer la liaison (S3).

4. Système de gestion de dispositifs (1) selon l'une quelconque des revendications précédentes, dans lequel l'envoi, par le dispositif électronique (5), de l'instruction d'information d'enregistrement au second serveur (4) pour exécuter la liaison comprend : réception, par le dispositif électronique (5), d'une instruction d'autorisation d'enregistrement et d'une clé publique du second serveur (4) (S71).

5. Système de gestion de dispositifs (1) selon l'une quelconque des revendications précédentes, dans lequel l'échange de l'information de données entre le dispositif électronique (5) et le second serveur (4) comprend :
vérification de l'information de données par le second serveur (4) à l'aide d'une clé publique du dispositif électronique (5) dans l'instruction d'information d'enregistrement pour déterminer s'il faut recevoir l'information de données (S73).

6. Procédé de gestion de dispositifs adapté à un système de gestion de dispositifs (1), dans lequel le système de gestion de dispositifs (1) comprend un serveur d'entrée (2), un premier serveur (3), un second serveur (4) et un dispositif électronique (5), le dispositif électronique (5) et le premier serveur (3) sont liés ensemble, et le procédé de gestion de dispositifs comprend :
envoi, par le serveur d'entrée (2), d'une instruction de commutation de serveur correspondant au dispositif électronique (5) au premier serveur (3), de sorte que le premier serveur (3) envoie une instruction de terminaison de liaison au dispositif électronique (5) (S1) ;
envoi, par le dispositif électronique (5), d'une instruction de demande d'adresse correspondant au second serveur (4) au serveur d'entrée (2), de sorte que le serveur d'entrée (2) envoie une adresse du second serveur (4) au dispositif électronique (5) (S5) ; et
envoi, par le dispositif électronique (5), d'une instruction d'information d'enregistrement au second serveur (4) pour exécuter la liaison, et échange d'information de données avec le second serveur (4) (S7).

7. Procédé de gestion de dispositifs selon la revendication 6, dans lequel le premier serveur (3) et le second serveur (4) sont des serveurs d'Internet des objets, et le dispositif électronique (5) est un dispositif d'Internet des objets.

8. Procédé de gestion de dispositifs selon la revendication 6 ou 7, dans lequel le procédé de gestion de dispositifs comprend en outre :
vérification de l'instruction de terminaison de liaison par le dispositif électronique (5) à l'aide d'une clé publique du premier serveur (3) pour déterminer s'il faut terminer la liaison (S3).

9. Procédé de gestion de dispositifs selon l'une quelconque des revendications 6 à 8, dans lequel le
envoi, par le dispositif électronique (5), de l'instruction d'information d'enregistrement au second serveur (4) pour exécuter la liaison comprend :
réception, par le dispositif électronique (5), d'une instruction d'autorisation d'enregistrement et d'une clé publique du second serveur (4) (S71).

10. Procédé de gestion de dispositifs selon l'une quelconque des revendications 6 à 9, dans lequel l'échange de l'information de données entre le dispositif électronique (5) et le second serveur (4) comprend :
vérification de l'information de données par le second serveur (4) à l'aide d'une clé publique du dispositif électronique (5) dans l'instruction d'information d'enregistrement pour déterminer s'il faut recevoir l'information de données (S73).
